(19) Europäisches Patentamt
European Patent Office
Office européen des brevets

(11) **EP 4 730 675 A1**

(12) **EUROPEAN PATENT APPLICATION**

(43) Date of publication:
**22.04.2026 Bulletin 2026/17**

(21) Application number: **24306729.5**

(22) Date of filing: **17.10.2024**

(51) International Patent Classification (IPC):
**H04B 10/2569** *(2013.01)* **H04B 10/2507** *(2013.01)*
**H04B 10/69** *(2013.01)*

(52) Cooperative Patent Classification (CPC):
**H04B 10/2569; H04B 10/2572; H04B 10/6971**

| | |
|---|---|
| (84) Designated Contracting States:<br>**AL AT BE BG CH CY CZ DE DK EE ES FI FR GB GR HR HU IE IS IT LI LT LU LV MC ME MK MT NL NO PL PT RO RS SE SI SK SM TR**<br>Designated Extension States:<br>**BA**<br>Designated Validation States:<br>**GE KH MA MD TN**<br><br>(71) Applicants:<br>• **Mitsubishi Electric R & D Centre Europe B.V.**<br>**1119 NS Schiphol Rijk (NL)**<br>Designated Contracting States:<br>**FR** | • **MITSUBISHI ELECTRIC CORPORATION**<br>**Chiyoda-ku**<br>**Tokyo 100-8310 (JP)**<br>Designated Contracting States:<br>**AL AT BE BG CH CY CZ DE DK EE ES FI GB GR HR HU IE IS IT LI LT LU LV MC ME MK MT NL NO PL PT RO RS SE SI SK SM TR**<br><br>(72) Inventor: **FROC, Gwillerm**<br>**35708 RENNES Cedex 7 (FR)**<br><br>(74) Representative: **Cabinet Le Guen Maillet**<br>**3, impasse de la Vigie**<br>**CS 71840**<br>**35418 Saint-Malo Cedex (FR)** |

(54) **METHOD FOR CONFIGURING A TRANSCEIVER OPTICAL DEVICE FOR EQUALIZATION-RELATED OPERATIONS**

(57) An equalization optimizer (300) analyzes successive samples of at least one channel-related parameter (Pc) so as to determine contribution values of one or more time-reference classes representative of timescales of impact of channel impairments on response of an optical channel. The equalization optimizer (300) obtains environmental conditions data (Ed) representing environmental conditions at which equalization-related operations have to be performed. The equalization optimizer (300) performs channel inference so as to determine a contribution value for one or more remaining timereference classes among said time-reference classes by relying on information learnt (Ld) from another channel in similar environmental conditions. The equalization optimizer (300) determines a value of at least one equalization-related parameter (Pe) according to the contribution values of the time-reference classes, and configures the equalization-related operations in accordance.

Fig. 3

Processed by Luminess, 75001 PARIS (FR)

**Description**

TECHNICAL FIELD

The present invention generally relates to optical communications and more particularly to configuring a transceiver optical device for equalization-related operations.

RELATED ART

Optical communications are increasingly used to give network access (typically Internet access) to residential, office or enterprise gateways, or data centers, in the scope of FTTH ("Fiber To The Home") or FTTR ("Fiber To The Room" in the context or industrial PON ("Passive Optical Network") for instance) technology deployments. Optical communications may also be used to ensure mobile infrastructure backhauling for instance in the scope of the deployment of 3G (3rd generation) or 4G (4th generation) mobile technologies using typically Point-to-Point arrangements.

With the emerging 5G (5th generation) mobile technology, fronthauling is about to appear and the needs in terms of data rate capabilities are significantly increased. One may refer to the International Mobile Telecommunications (IMT) recommendations ITU-R M.2083 "IMT Vision: Framework and overall objectives of the future development of IMT for 2020 and beyond", released in September 2015. In such a framework, fronthauling is achieved by moving upstream in the mobile infrastructure processing functions that were previously performed at base stations or nearby in the 3G or 4G mobile technologies. It is referred to as "split options" in the specifications 3GPP TR 38.801 V 14.0.0 "Study on new radio access technology: Radio access architecture and interfaces", released in March 2017 (see more particularly therein Section 11 and Table A-1).

Therefore, 5G mobile technology and industrial PONs have a wider set of requirements as compared to FTTH requirements that have driven optical access technology evolution until now. 5G mobile technology and industrial PONs translate thus into higher nominal data rates, reduced latency and denser deployment, among others.

Furthermore, the Internet of Things, edge computing, Artificial Intelligence, robotics and augmented reality, etc. are technology trends that are highly demanding in terms of communication infrastructures. However, these technology trends have also widely different requirements in terms of data throughputs or quality of services which shall be supported by optical access networks.

Optical access systems shall thus nowadays be able to carry very high data rate throughputs (beyond 50 Gbits/s or even several hundreds of Gbits/s in a near future) as well as very low data rates to carry IoT flows for instance. Optical access networks shall be able to support low latency, as a fraction of one millisecond, for applications such as virtual reality or industrial applications. This requires highly flexible and efficient optical infrastructure.

Due to this variety of applications and corresponding requirements, one may now refer to "optical access and aggregation networks" instead of simply referring to "optical access networks".

It has to be moreover considered that optical lines may have to cope with a constraint of very different lengths, typically from few hundreds of meters to 40 kilometers.

Such a wide variety of requirements and constraints imply difficulties in terms of managing optical signal impairments (for example, optical signal spreading over time) that are of wide variety over time and which induce as a consequence a wide variety of channel responses over time in optical access networks, especially due to varying environmental conditions.

First of all, environmental temperature variations have also a noticeable effect on chromatic dispersion in high bitrate optical communication systems. And it should be noticed that optical access and aggregation networks are typically deployed in a temperature-uncontrolled environment (outdoor, in-ground or in the air). Therefore, optical lines incur vibrations due to wind and vehicles potentially passing by, in addition to the aforementioned temperature variations. Vibrations and temperature variations impact polarization mode dispersion (PMD). Polarization mode dispersion results from a relative delay between both polarization axis in case of an application of anisotropic constraints on the optical lines. This relative delay depends on the root square of the length of the optical lines.

It can be demonstrated that, for an outage probability of $10^{-7}$ (which corresponds to 3 seconds of failure per year), optical signal spreading over time may be six times greater than mean differential group delay (DGD). In optical access and aggregation networks, the mean differential group delay varies with a magnitude that can range over a wide scale, from 0.05 picosecond per $km^{0,5}$ as typically encountered in core networks, up to tens of picoseconds per $km^{0.5}$ in harsh conditions, which is hundreds of times higher than the typical value in core networks. Thus, for an outage probability of $10^{-7}$ and considering a mean differential group delay that can vary from 0.05 $ps/km^{0.5}$ to 10 $ps/km^{0.5}$, the variation of optical signal spreading over time, which encompasses channel impairments, relates to the polarization mode dispersion (PMD) which can vary from a fraction of the symbol period to almost 20 symbol periods for a 30 Gbauds system or even 45 symbol periods considering a 100 Gbauds system.

Another aspect is that, in uncontrolled environments as encountered by optical access and aggregation networks, the nominal wavelength of laser sources or the central wavelength of optical band-pass filters, which prevent from inter-channel cross talk for instance, can shift, especially relatively to each other. Since such kind of devices are located at different geographical places in optical access and aggregation networks deployment, such devices are subject to different environmental conditions, which induce relative wavelength shifts. For example, considering an optical band-pass filter of 100 GHz at 3dB based on Bragg gratings, its time response may spread over 200 picoseconds when a carrier wavelength shifts over the pass band of the optical band-pass filter. It may correspond to a time variation of almost 10 symbol periods for a 30 Gbauds system or even 30 symbol periods considering a 100 Gbauds system.

As can be understood from the foregoing, many physical phenomena impact channel responses in optical access and aggregation networks. Such physical phenomena may have been considered as insignificant in the past, and often considered as not time-dependent, since high needs in terms of data rate capabilities were only considered for core networks with controlled environments, while optical access networks in uncontrolled environments targeted far lower needs in terms of data rate capabilities.

Optical access and aggregation networks have now to cope with these channel impairments. Equalization shall therefore be performed. Equalization can be performed in the time domain or in the frequency domain, but it is considered herein that equalization is performed in the time domain. Indeed, equalization in the frequency domain requires that acquired optical signal in the time domain be translated into the frequency domain, e.g., using FFT ("Fast Fourier Transform") on blocks of time domain samples, before any kind of equalization digital processing, Equalization in the frequency domain is therefore intrinsically of significant complexity compared with equalization in the time domain.

Equalization is a signal processing procedure that aims at mitigating inter-symbol interference (ISI) on a communication channel. Equalization is performed on a depth of resources over time, which is called "channel depth" in the art, and which is supposed to contain information useful to compensate optical signal spreading so as to retrieve information as emitted.

For the sake of understanding, considering linear equalization in time domain, an estimation $\hat{I}_k$ of a $k$-th symbol $I_k$ of a transmitted optical signal $I$ which is obtained from equalization over successive received symbol samples $\{v_{k-K} ; v_{k+K}\}$ may be expressed as follows:

$$\hat{I}_k = \sum_{j=-K}^{K} \left( C_j \times v_{k+j} \right)$$

wherein $j$ is an integer varying from $-K$ to $K$, which means that $2K+1$ equalization coefficients $C_j$ are used in conjunction with $2K+1$ symbol samples $v_{k+j}$. Symbols before $j=-K$ and beyond $j=K$ are insignificant for obtaining the

estimation $\hat{I}_k$, $2K+1$ hence representing the channel depth.

Different techniques may be used to determine the equalization coefficients $C_j$ and to update them according to evolution of the communication channel over time. Data-aided schemes that are based on the analysis of dedicated exchanged sequences, or blind equalization techniques as LMS (Least Mean Square) or CMA (Constant Modulus algorithm), which do not need any prior knowledge of channel response to find adequate values of equalization coefficients (which are often referred to as "taps" in equalization in the time domain) can be used.

As dimensioning of the optical links, dimensioning of equalization resources needs to be defined according to the worst spreading case that is acceptable according to system specifications. In view of the foregoing, numerous pieces of information have to be retrieved from the channel, numerous samples with potentially high number of resolution bits have to be processed in order to perform equalization in the worst spreading case, which means that numerous equalization coefficients coded over a high number of resolution bits have to be computed, and which further means that numerous computing resources and energy have to be dedicated to optical signal equalization once the equalization coefficients are adequately determined.

Relying on the worst spreading case to operate equalization resources is however not efficient in terms of equalization resources and energy usage.

It is therefore desirable to provide an effective solution in terms of computing resource and energy consumption suitable for optical access and aggregation networks. It is desirable to provide a solution that is simple as possible.

SUMMARY OF THE INVENTION

To that end, it is proposed herein a method for configuring a transceiver optical device in terms of equalization-related operations with respect to optical signals transmitted via a channel of an optical line, the optical signals being subject during transmission over the channel to channel impairments having timescales of impact on channel response of the channel which can be categorized into corresponding time-reference classes, the method being performed by an equalization optimizer, wherein the method comprises:

- performing an analysis for analyzing successive samples of at least one channel-related parameter Pc related to said channel so as to determine a contribution value for one or more time-reference classes among said time-reference classes, wherein the contribution value represents to what extent the channel impairments corresponding to the time-reference class in question contribute to said at least one channel-related parameter Pc;
- obtaining environmental conditions data representing environmental conditions at which the equalization-related operations have to be performed;

- performing channel inference so as to determine a contribution value for one or more remaining time-reference classes among said time-reference classes by relying on information learnt from another channel in similar environmental conditions as those represented by the obtained environmental conditions data;
- determining a value of at least one equalization-related parameter Pe according to the contribution values of the predetermined time-reference classes; and
- configuring the transceiver optical device for equalization-related operations with respect to the optical signals transmitted via the channel, using the determined value of the at least one equalization-related parameter.

Thus, thanks to the use of the time-reference class, channel inference can be performed with accuracy, namely only for the concerned contribution to the at least one channel-related parameter Pc, which means that only a part of the at least one equalization-related parameter Pe is impacted (and consequently only a part of the equalization operations).

In a particular embodiment, the contribution value for each class is determined using wavelet transforms, and wherein, for each time-reference class, the equalization optimizer uses at least one wavelet with a timescale matching the timescale of impact on the channel of the channel impairments corresponding to the time-reference class in question.

Thus, orthogonal contributions can easily be detected using the wavelet transforms since said wavelet transforms form an orthogonal basis.

In a particular embodiment, the time-reference classes are dynamically predetermined during a period of time in which equalization is performed at receiver side at full resources capacity, wherein a whole set of wavelet transform candidates are used to detect which timescales are revealed to be above a predetermined contribution threshold with respect to the at least one channel-related parameter or to at least one other channel-related parameter and shall be retained to define the time-reference classes to be used afterwards.

Thus, orthogonal contributions can efficiently be dynamically defined.

In a particular embodiment, the equalization-related operations are among:

- dynamically determining a quantity of hardware blocks of the transceiver optical device usable to perform equalization of the optical signals;
- dynamically determining a set of equalization coefficients;
- dynamically determining a set of pre-equalization coefficients;
- dynamically determining preamble size; and
- dynamically determining margin on the at least one equalization-related parameter Pe.

In a particular embodiment, the equalization optimizer adds a predetermined margin to each determined contribution value, wherein the margin depends on the contribution value to which the margin applies.

In a particular embodiment, when a predetermined time duration threshold has lapsed since recording of the value of contribution of one or more time-reference classes to the at least one channel-related parameter Pc for the channel, the equalization optimizer performs the channel inference.

Thus, channel inference is used when the analysis has not been performed for the channel for a long time.

In a particular embodiment, the equalization optimizer selectively activates / inactivates the analysis of the samples of the at least one channel-related parameter Pc for one or more time-reference classes, according to presence or aging of respective contribution values in records for said environmental conditions data.

Thus, the equalization optimizer uses computing resources and energy for the analysis when needed to complete the records.

In a particular embodiment, performing the channel inference includes:

- identifying, among the learnt data (Ld), candidate channels that have similar contribution values for the one or more time-reference classes in other environmental conditions.

Thus, the candidate channels for channel inference can easily be identified and selection can easily be made from amongst them.

In a particular embodiment, performing the channel inference includes:

- selecting at least one type of environmental conditions data among candidate types of environmental conditions data, according to the one or more remaining time-reference classes;
- identifying, among the learnt data (Ld), candidate channels that are usable for performing the channel inference according to similarity of environmental conditions for the selected at least one type of environmental conditions data.

Thus, the candidate channels for channel inference can easily be identified according to specific environmental conditions (e.g., in windy conditions) and selection can easily be made from amongst them.

In a particular embodiment, when the contribution value for one time-reference class to the at least one channel-related parameter Pc is below a predetermined threshold THc, the equalization optimizer does not take into account said time-reference class when configuring or reconfiguring the transceiver optical device for the equalization-related operations.

Thus, computing resources are preserved.

In a particular embodiment, when the difference in contribution value for one class between two successive reviews of the contribution of said time-reference class to the at least one channel-related parameter Pc is below a predetermined threshold THd, the equalization optimizer does not update the part of the at least one equalization-related parameter Pe which depends on the time-reference class in question.

Thus, when for example actualizing equalization coefficients, the part of the equalization coefficients that are related to the contribution of said time-reference class is not updated and therefore computing complexity is reduced (such as quantity of coefficients to be solved and depth of the coefficients during resolution of the coefficients in question in an iterative process).

In a particular embodiment, the equalization optimizer is located at a central point in an optical communications system, and the aforementioned contributions values are used to perform pre-equalization at the central point end in downstream direction and post-equalization at the central point in upstream direction.

Thus, system-wide implementation is made easier since most computing resources are gathered in a single location, which is practically efficient for optical access and aggregation networks, as well as for access to equipment (e.g., sensors) providing information about the environmental conditions.

It is further proposed herein a computer program product comprising instructions causing implementation of the aforementioned method in any one of its embodiments, when the instructions are executed by a processor.

It is further proposed herein an information storage medium storing instructions causing implementation of the aforementioned method in any one of its embodiments, when the instructions are read from the information storage medium and executed by a processor.

It is further proposed herein an equalization optimizer intended for configuring a transceiver optical device in terms of equalization-related operations with respect to optical signals transmitted via a channel of an optical line, the optical signals being subject during transmission over the channel to channel impairments having timescales of impact of said channel impairments on channel response of the channel which can be categorized into corresponding time-reference classes, the equalization optimizer comprising electronic circuitry configured for:

- performing an analysis for analyzing successive samples of at least one channel-related parameter Pc related to said channel so as to determine a contribution value for one or more time-reference classes among said time-reference classes, wherein the contribution value represents to what extent the channel impairments corresponding to the time-reference class in question contribute to said at least one channel-related parameter Pc;

- obtaining environmental conditions data representing environmental conditions at which the equalization-related operations have to be performed;

- performing channel inference so as to determine a contribution value for one or more remaining time-reference classes among said time-reference classes by relying on information learnt from another channel in similar environmental conditions as those represented by the obtained environmental conditions data;

- determining a value of at least one equalization-related parameter Pe according to the contribution values of the predetermined time-reference classes; and

- configuring the transceiver optical device for equalization-related operations with respect to the optical signals transmitted via the channel, using the determined value of the at least one equalization-related parameter.

BRIEF DESCRIPTION OF THE DRAWINGS

The characteristics of the invention will emerge more clearly from a reading of the following description of at least one example of embodiment, said description being produced with reference to the accompanying drawings, among which:

- Fig. 1 schematically represents an arrangement of an optical communications system, in which the present invention may be implemented;
- Fig. 2 schematically represents an arrangement of transceiver optical devices of the optical communications system;
- Fig. 3 schematically represents an arrangement of an equalization optimizer;
- Fig. 4 schematically represents an algorithm for recording information with respect to a channel for which equalization-related operations have to be configured and applied;
- Fig. 5 schematically represents an algorithm for recording information with respect to other channels, which can be used for channel inference for configuring the equalization-related operations;
- Fig. 6 schematically represents an algorithm for configuring a transceiver optical device with respect to the equalization-related operations;
- Fig. 7 schematically represents an algorithm for selectively activating an analysis performed by the equalization optimizer for configuring the equalization-related operations; and
- Fig. 8 schematically represents an exemplary hardware platform for implementing the equalization optimizer.

## DETAILED DESCRIPTION OF AT LEAST ONE EMBODIMENT

It has to be noticed that, since wavelength and frequency are tied together through a direct inverse relationship, these two terms are indifferently used by the one skilled in the art, as they refer to the same concept.

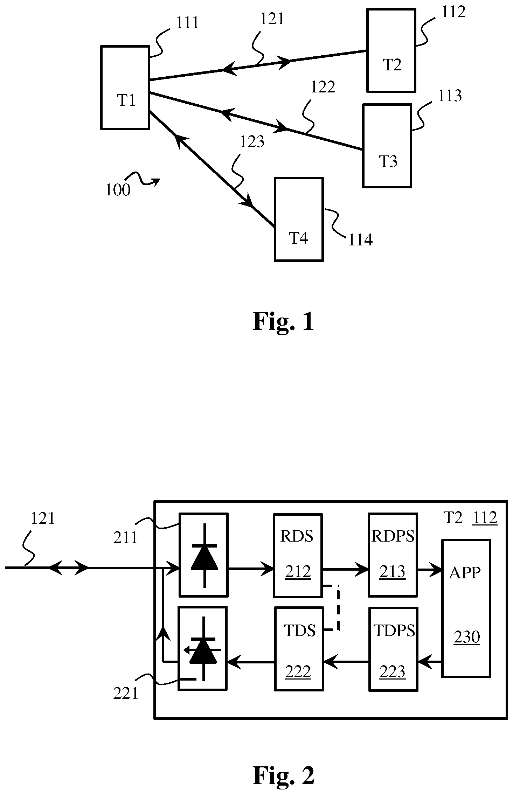

**Fig. 1** schematically represents an arrangement of an optical communications system 100, in which the present invention may be implemented.

The optical communications system 100 is part of an optical access and aggregation network.

The optical communications system 100 comprises at least a first transceiver optical device T1 111 and a second transceiver optical device T2 112 communicating with each other using an optical line 121.

As illustratively shown in Fig. 1, the optical communications system 100, the first transceiver optical device T1 111 may communicate with other transceiver optical devices T3 113, T4 114 using respective optical lines 122, 123.

Optical lines are optical paths between transceiver optical devices. Optical lines comprise optical fiber, but may further comprise power splitters, spectral splitter device to perform WDM *(Wavelength Division Multiplexing),* optical termination outlets, optical termination connectors...

Optical signals are thus transmitted in the optical communications system 100 through channels over the optical lines. Channels are communication pathways within the optical communications system 100 from a transceiver A to a transceiver B.

The channel from the transceiver A to the transceiver B can be defined as the optical path from said transceiver A to said transceiver B. The channel from the transceiver A to the transceiver B can be defined as further including analog optical stages of said transceiver A (laser...) and/or said transceiver B (photodiode...). The channel from the transceiver A to the transceiver B can be defined as further including analog electrical stages of said transceiver A and/or said transceiver B (transimpedance amplifiers, DAC / ADC ("Digital to Analog Converter" / "Analog-to-Digital Converter")...). The channel from the transceiver A to the transceiver B can be defined as further including digital processing after equalization operations of said transceiver A (often referred to as pre-equalization, *i.e.,* equalization at transmitter side) and/or digital processing before equalization operations of said transceiver B (often referred to as post-equalization, *i.e.,* equalization at receiver side).

Often, but not necessarily, channels are reciprocal in both directions of communication over an optical line, and more generally between one transceiver and another transceiver.

For example, the first transceiver optical device T1 111 is an OLT (*Optical Line Terminal*) device, and the second transceiver optical device T2 112, as well as the other transceiver optical devices T3 113, T4 114, are ONU (*Optical Network Units*) devices.

**Fig. 2** schematically represents an arrangement of the transceiver optical devices of the optical communications system 100. Let's consider that Fig. 2 schematically represents an arrangement of the second transceiver optical device T2 112.

The second transceiver optical device T2 112 comprises a receive chain and a transmit chain.

The receive chain comprises a receive analog stage 211, with an optical part including a photodiode to capture optical signals transmitted by the first transceiver optical device T1 111 via the optical line 121 and, downstream, an electrical part including at least typically a transimpedance amplifier and an analog-to-digital converter ADC. The receive chain further comprises a receive digital stage RDS 212 for performing digital processing on the captured optical signals. Digital processing in the receive chain typically includes demodulation, equalization and removal of equalization overhead. Equalization overhead shall be understood as preamble (a sequence of symbols sent prior to a data frame and used for channel estimation) since equalization is considered herein in the time domain, or other reference signals which may be only statistically known (*e.g.*, blind equalization), used to enable defining the appropriate equalization coefficients at reception. The receive chain further comprises a receive data processing stage RDPS 213 for unpacking data to be processed by an application APP 230.

The transmit chain comprises a transmit data processing stage TDPS 223 for packing data provided by the application APP 230. The transmit chain further comprises a transmit digital stage TDS 222 for performing digital processing on the packed data. Digital processing in the transmit chain typically includes modulation and equalization overhead (such as preamble) insertion. The transmit chain further comprises a transmit analog stage 221, with an optical part including a laser to transmit optical signals to the first transceiver optical device T1 111 via the optical line 121, and, upstream, an electrical part including at least typically a digital-to-analog converter DAC.

As illustratively indicated by a dotted line in Fig. 2, the receive digital stage RDS 212 may communicate equalization-related information to the transmit digital stage TDS 222 in order to configure a size of preamble to be used in the transmit chain of the second transceiver optical device T2 112 and/or to provide feedback information to the first transceiver optical device T1 111 so that said first transceiver optical device T1 111 may perform accordingly its own equalization operations (e.g., pre-equalization). In a variant, this communication of equalization-related information from the receive chain to the transmit chain may be performed via the receive data processing stage RDPS 213 and the transmit data processing stage TDPS 223 to ease information packing toward the first transceiver optical device T1 111.

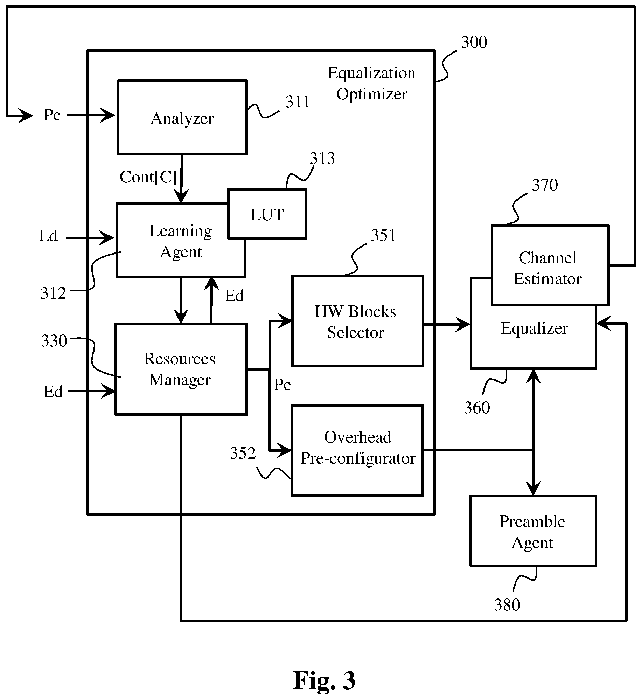

**Fig. 3** schematically represents an arrangement of an equalization optimizer 300, in a first embodiment. The equalization optimizer 300 aims at optimizing configuration of the equalizer 600, in terms of processing resources usage and of energy usage, with respect to equalization-related operations with respect to a channel C. For example, better processing resources usage and energy usage can be achieved through preamble length reduction.

The equalization optimizer 300 is preferably part of the receive digital stage RDS 212 of the arrangement in Fig. 2 and is connected to an equalizer 360.

The equalization optimizer 300 may, in a variant, be included in a device external to the transceiver in which equalization is performed. Hence, in a particular embodiment, the equalization optimizer 300 is included in a central office potentially included in an OLT device, which typically has numerous computing and memory resources, and performs equalization optimization for the benefit of ONU devices, which typically have comparatively few computing and memory resources.

The equalization optimizer 300 comprises an analyzer 311 configured to analyze, over time, variations of at least one channel-related parameter (referred to as Pc in Fig. 3) with respect to the channel C in question. Such a channel-related parameter is for example channel depth, the speed of change of the channel possibly with related statistics (mean variance, etc.), the time of coherence of the channel possibly with related statistics (mean, variance, etc.), the peak-to-average-power-ratio (PAPR) of the optical signals received via the channel...

The analyzer 311 is configured to determine contributions to the at least one channel-related parameter in question according to time-reference classes. Indeed, during transmission over the channel, the optical signals are subject to channel impairments, resulting notably in optical signal spreading, which have timescales (also referred to as time constants) of impact of said channel impairments on channel response which can be categorized into corresponding time-reference classes.

Channel impairments may be due to various phenomena occurring during transmission (vibrations, change of environmental conditions...). For example, some physical phenomena may impact the magnitude of the optical signal spreading above a predetermined threshold THS within a time window of ten microseconds (*e.g.*, polarization mode dispersion PMD) while some other physical phenomena may impact the magnitude of the optical signal spreading above the predetermined threshold THS within one millisecond (*e.g.*, vibrations incurred by connectors due to wind or vehicle passing nearby). Channel impairments may also be due to quantization operations due to analog-to-digital conversion. Indeed, loss of data which is inherent to passing from analog domain to digital domain may create channel impairments. Channel impairments may also be due to bandwidth limited capabilities with respect to optical signal bandwidth, which may induce loss of data under certain circumstances and thus channel impairments.

Although it can be considered that one or more channel impairments impact the channel response with a timescale corresponding to a single time-reference classes, it is also possible that one or more channel impairments impact the channel response with timescales corresponding to plural time-reference classes. It further means that one time-reference class may correspond to one or more channel impairments.

The analyzer 311 is therefore configured to determine, on a per-class basis (according to the time-reference classes), to what extent the channel impairments associated with the time-reference class in question contribute to the value of the at least one channel-related parameter Pc with respect to the channel C in question.

The time-reference classes may be predefined, for instance by simulation or analysis of the optical communications system 100 before deployment thereof. The time-reference classes may, in a variant, be dynamically determined during a period of time (*e.g.*, ten seconds) in which equalization is performed at receiver side at full resources capacity. For example, during this period of time, a whole set of wavelet transform candidates are used to detect which timescales are revealed to be above a predetermined contribution threshold with respect to the at least one channel-related parameter Pc or to at least one other channel-related parameter and shall be retained to define the time-reference classes to be used afterwards. It can be noted that more than one wavelet transform candidate may be used per time-reference class. For example, several wavelet transform candidates with the same shape and the same timescale but with different shifts may be used for the same time-reference class.

In a particular embodiment, the time-reference classes may be dynamically reevaluated from time to time, for example on a regular basis or following occurrence of a predetermined event. The whole set of wavelet transform candidates is used to detect again which timescales are revealed to be above the predetermined contribution threshold with respect to the at least one channel-related parameter Pc or to said at least one other channel-related parameter and shall be retained to define up-to-date time-reference classes to be used afterwards.

As detailed hereafter, at least one equalization-related parameter Pe is determined according to the determined contributions of the predetermined time-reference classes, wherein the at least one equalization-related parameter Pe depends on the at least one channel-related parameter Pc.

An example of equalization-related parameter Pe is a set of equalization coefficients. Another example of equalization-related parameter Pe is a number of hardware blocks (logic cells, registers, multipliers, memory storage) used for performing equalization. Yet another example of equalization-related parameter Pe is preamble length. Yet another example of equalization-related parameter Pe is margin applied to preamble length. Yet another example of equalization-related parameter Pe is a set of pre-equalization coefficients (signal shaping prior to transmission over the channel).

The analyzer 311 is preferably further configured to review the contribution of each time-reference class. This can be done by analyzing again the variations of the at least one channel-related parameter Pc (with respect to the channel C in question). Considering one said time-reference class, re-execution of the analysis can be done at a rate of the timescale of the one or more channel impairments corresponding to the time-reference class in question. When the analysis of the variations of the at least one channel-related parameter Pc cannot be done for one or more time-reference classes, for example to save computing resources, then channel inference is performed in order to use the contributions for said one or more time-reference classes which have been determined for one or more other channels. Channel inference can be done by relying on environmental conditions data Ed, as detailed hereafter.

The environmental conditions data Ed are environmental information about physical parameters or derivatives which have influence on channel response of a considered optical line and thus generate variations of the channel response, and may include: temperature information (as provided by temperature sensors along the optical line in question), speed of change of temperature (due to clouds passing by, for example), wind strength information, vibrations strength information, etc.

Illustratively on Fig; 3, the environmental conditions data Ed are received by a resources manager 330, in charge of preparing resources for the equalization-related operations, which forwards said environmental conditions data Ed to a learning agent, in charge of collecting per-class contributions data.

Consequently, in both cases (analysis or channel inference), the at least one equalization-related parameter Pe is partly updated accordingly so that a part thereof which depends on the time-reference class in question is only updated. In a particular embodiment, more margin is used when the contributions for said one or more time-reference classes have been determined by channel inference compared with the margin used when the contributions for said one or more time-reference classes have been directly determined by the equalization optimizer 300 by analysis of the variations of the at least one channel-related parameter Pc.

As an explanatory example, the analyzer 311 reviews every millisecond information about the contribution to the at least one channel-related parameter Pc of the one or more channel impairments having a millisecond timescale of impact on the channel response, and the part of the at least one equalization-related parameter Pe which depends on the millisecond time-reference class is updated accordingly (if needed) also every millisecond. And the analyzer 311 updates every ten microseconds information about the contribution to the at least one channel-related parameter Pc of the one or more channel impairments having a ten-microsecond timescale of impact on the channel response. Instead, the analyzer 311 may perform channel inference and obtain information about the contribution to the at least one channel-related parameter Pc of the one or more channel impairments having a ten-microsecond timescale of impact on the channel response of another channel. Then the part of the at least one equalization-related parameter Pe which depends on the ten-microsecond time-reference class is updated accordingly (if needed) also every ten microseconds.

In the receive digital stage RDS 212, the equalizer 360 includes or is connected to a channel estimator 370. The channel estimator 370 is configured to estimate the response of the optical line 121 so as to enable the equalizer 360 to determine adequate values of equalization coefficients. Channel estimation can be non-data-aided or data-aided. The channel estimator 370 is preferably further configured to monitor equalization performance, the speed of change of the channel and the time of coherence of the channel and possibly with related statistics (mean, variance...). The time of coherence of the channel is defined as the time duration during which the channel has constant or monotonous behavior. The channel estimator 370 may further be configured to monitor signal-to-noise ratio (SNR), which is an indication of equalization performance. The channel estimator 370 is configured to provide in accordance the at least one channel-related parameter Pc used by the analyzer 311.

The equalization optimizer 300 comprises the aforementioned resources manager 330 configured to determine a value of at least one equalization-related parameter Pe (which depends on the at least one channel-related parameter Pc) according to said contributions of the predetermined time-reference classes which are determined by the analyzer 311 or are obtained by channel inference by relying on the environmental conditions data Ed. The resources manager 330 is also configured to update the at least one equalization-related parameter Pe, each time one or more contributions are reviewed, for a part of the at least one equalization-related parameter Pe which depends on the time-reference class to which the contribution in question corresponds. It means that, unless the contribution of one of said time-reference class is reviewed, the part of the at least one equalization-related parameter Pe which depends on the time-reference class in question remains unchanged.

The resources manager 330 is configured to configure equalization-related operations according to the at least one equalization-related parameter Pe as determined or reviewed.

In a particular embodiment, the equalization-related operations are among:

- dynamically determining a quantity of hardware blocks of the transceiver optical device usable to perform equalization of the optical signals;
- dynamically determining a set of equalization coefficients;
- dynamically determining a set of pre-equalization coefficients; and
- dynamically determining preamble size;
- dynamically determining a margin on the at least one equalization-related parameter Pe.

The equalization optimizer 300 comprises a learning agent 312 that is present between the analyzer 311 and the resources manager 330.

The learning agent 312 is configured to receive information about the contribution of each time-reference class determined by the analyzer 311 and labelled Cont [C] in Fig. 3 (vector of contributions determined for channel C). The contribution of each time-reference class thus determined can then be used for configuring the equalization-related operations through the at least one equalization-related parameter Pe.

The learning agent 312 is configured to further receive information about the contribution to the at least one channel-related parameter Pc of each time-reference class determined for other channels CH_Id in the optical communications system 100 than the channel C for which the analyzer 311 monitors and analyzes the at least one channel-related parameter Pc. The learning agent 312 is thus configured to further receive information about said per-class contributions Cont [CH_Id] corresponding to several channels (vector of contributions determined for each channel CH_Id). For example, in Fig. 1, the first transceiver optical device T1 111 has one analyzer for each channel from the second transceiver optical device T2 112 and from the other transceiver optical devices T3 113, T4 114, and the first transceiver optical device T1 111 is configured to receive information about the contribution of each time-reference class determined by each analyzer. According to another example, the second transceiver optical device T2 112 receives information about the contribution of each time-reference class determined for other channels by the first transceiver optical device T1 111. Moreover, the first transceiver optical device T1 111 may share with the second transceiver optical device T2 112 information about the contribution of each time-reference class determined for other channels by the other transceiver optical devices T3 113, T4 114.

The aforementioned per-class contributions Cont [CH_Id] are included in learnt data Ld which further include environmental conditions data Ed [CH_Id] representing the environmental conditions in which the per-class contributions Cont [CH_Id] have been obtained.

The learning agent 312 is configured to store the received information Cont [CH_Id] and Ed [CH_Id] in look-up tables 313. The contents of the look-up tables 313 can then be used for channel inference, namely, to use, for equalization operations related to the channel C, per-class contributions data stored in the look-up tables 313 with respect to one or more other channels CH_Id.

In a particular embodiment, the learning agent 312 is configured to further store the contribution Cont [C], as provided by the analyzer 311, in association with the environmental conditions data Ed as forwarded by the resources manager 330. It allows easily sharing in the optical communications system 100 all per-class contributions information known by the equalization optimizer 300, including information coming from analysis performed by the equalization optimizer 300 with respect to the channel C, as well as information received by the equalization optimizer 300 with respect to other channels CH_Id. Moreover, when the equalization optimizer 300 is located in a central point (such as at the first transceiver optical device T1 111 in Fig. 1), it enables easily using the per-class contributions data collected with respect to channel C to perform channel inference for one or more other channels CH_Id.

In a particular embodiment (as shown in Fig. 3), the equalization optimizer 300 comprises a hardware (HW) blocks selector 351. The hardware blocks selector 351 is configured by the resources manager 330 according to the at least one equalization-related parameter Pe to selectively activate/inactivate hardware blocks (logic cells, registers, multipliers, memory storage) used for performing equalization and to indicate to the equalizer 360 which hardware blocks are usable for performing equalization. This enables energy consumption reduction by inactivating hardware blocks unnecessary for performing equalization.

In a particular embodiment (as shown in Fig. 3), the equalization optimizer 300 comprises an overhead pre-configurator 352. The overhead pre-configurator 352 is configured by the resources manager 330 according to the at least one equalization-related parameter Pe to indicate to the equalizer 360 how many taps shall be processed in order to perform equalization.

In a particular embodiment, the overhead pre-configurator 352 is further configured to also indicate to a preamble agent 380 what shall be the appropriate size of the preamble in order to inform the transmit digital stage TDS 222 about the appropriate size of the preamble when transmitting optical signals via the optical line 121. This is particularly applicable when the channel is reciprocal (substantially identical channels in both directions over the optical line 121). This limits computing resources usage and energy consumption. It can be further noted that it also improves latency (e.g., shortened preamble compared with the worst case where the preamble has a maximum allowable size).

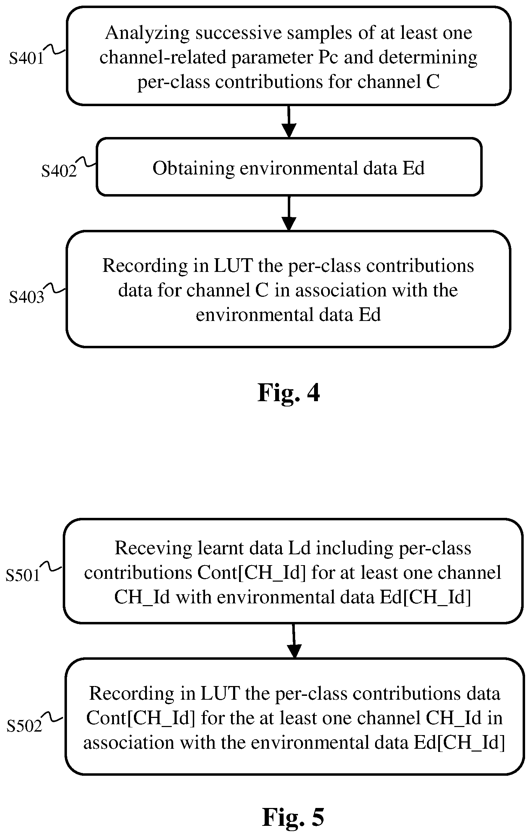

Fig. 4 schematically represents an algorithm for recording information with respect to a channel for which equalization-related operations have to be configured and applied, namely with respect to channel C in the context of Fig. 3.

In a step S401, the equalization optimizer 300 analyzes successive samples of at least one channel-related parameter Pc and determines a contribution value for at least one time-reference class among said predetermined time-reference classes (per-class contributions), wherein the contribution value represents to what extent the one or more channel impairments corresponding to the time-reference class in question contribute to said at least one channel-related parameter Pc.

The contributions values may be further decomposed over statistical moments e.g., as a mean value plus a variance value. This enables distinguishing impacts of channel impairments with continuous behavior (null or quasi-null variance) from impacts of channel impairments with random behavior (non-null variance).

In a particular embodiment, the contributions in question are determined using Fourier transforms over respective sliding windows, wherein each sliding window has a size that is equal to the timescale of the time-reference class for which the contribution in question is determined (timescale of impact on the channel response of the at least one channel impairment corresponding to the time-reference class in question). It means that a sliding window of 1 millisecond is used to determine the contribution to said channel-related parameter Pc of channel impairments having a millisecond timescale of impact on the channel response.

In a preferred variant embodiment, the contributions in question are determined using wavelet transforms, wherein, for each time-reference class, the equalization optimizer 300 uses a wavelet with a timescale matching the timescale of impact on the channel of the channel impairment corresponding to the time-reference class in question.

A wavelet is a wave-shaped signal that is time bounded. Considering a given shape for this wavelet, shifting its time origin and modifying its timescale enables capturing any kind of time varying signal. More precisely, considering a signal x(t), the wavelet transform of this signal is:

$$g(a,b) = \frac{1}{\sqrt{a}} \int_{t=-\infty}^{t=+\infty} x(t)\bar{\psi}_{a,b}(t)dt$$

with $a \neq 0$ being the timescale (frequency) and $b$ being the time origin,
wherein $\psi_{a,b}$ is obtained by translating and enlarging a particular function socalled mother wavelet:

$$\psi_{a,b}(t) = \psi\left(\frac{t-b}{a}\right)$$

In order to allow defining an orthogonal basis on which any signal of finite energy can be projected, the mother wavelet has to verify the following properties:

- $\psi$ should be an oscillating function having a null integral;
- the integral of its square should also be definite.

Despite other types of wavelets can be used herein, Haar wavelets are mother wavelength of particular interest. Indeed, let's consider a real function $x(t)$ that is defined over the interval [0,1[ and that is sampled over $N=2^m$, $m \neq 0$, points, and wherein $x_k$ is defined as

$$x_k = x(t_k) \text{ for } t_k = 0, \frac{1}{N}, ..., \frac{N-1}{N}$$

Let's further define $\phi(t)$ as

$$\phi(t) = \begin{cases} 1 \text{ for } 0 \leq t < 1 \\ 0 \text{ otherwise} \end{cases}$$

and

$$\phi_{j,k}(t) = \phi\left(2^j t - k\right)$$

which leads to

$$\phi_{j,k}(t) = \begin{cases} 1 \text{ for } \dfrac{k}{2^j} \leq t < \dfrac{k+1}{2^j} \\ 0 \text{ otherwise} \end{cases}$$

In that situation, x(t) can be recovered as

$$x(t) = \sum_{k=0}^{N-1} \left( x_k \phi_{m,k}(t) \right)$$

When denoting

$$\langle f, g \rangle = \int_0^1 f(t)g(t)dt$$

it leads to

$$\langle \phi_{j,k1}, \phi_{j,k2} \rangle = 0 \text{ for } k1 \neq k2$$

and

$$\left\| \phi_{j,k} \right\|^2 = \langle \phi_{j,k}, \phi_{j,k} \rangle = \frac{1}{2^j}$$

So, for each j, the functions $\phi_{j,k}(t)$ are an orthogonal basis that generates vectorial subspaces noted Vj of dimension $2^j$ of real functions that can be integrated over $\phi_{j,k}(t)$. This basis can be made orthonormal by multi-

plying $\phi_{j,k}(t)$ by $\sqrt{2^j}$ .

Considering the at least one channel-related parameter Pc as the signal to be analyzed (successive samples), this result is of importance since the decomposition of the signal leads to contribution of different and independent vectorial subspaces $Vj$ (i.e., different time constants), which also means in a linear channel assumption that the contribution of each vectorial subspace $Vj$ can be estimated and equalized independently from the others.

This means that at a time instant $t2$ following a previous estimation/equalization instant time $t1,$ only the contributions related to time-reference classes corresponding to the timescale substantially matching the time interval $t2-t1$ have to be recomputed and the other contributions can be kept unchanged.

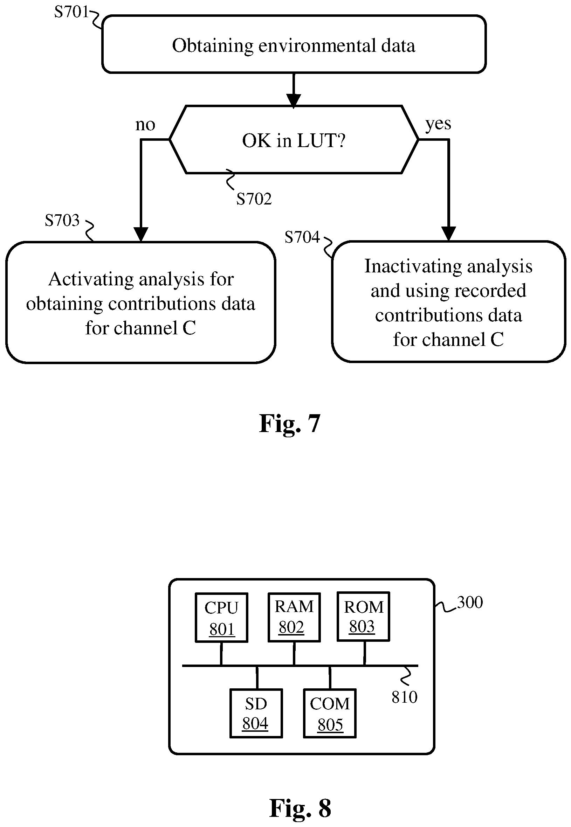

In a particular embodiment, the equalization optimizer 300 adds a predetermined margin to each determined contribution value. It means that, at each instant, the total margin applied is the sum of the margins for all the time-reference classes. The margin preferably depends on the contribution value to which the margin applies, e.g., as a predetermined percentage of the contribution value. A particular embodiment is presented hereafter with respect to Fig. 8.

It can further be noted that, when the contributions values are decomposed into a mean value plus a variance value, the margin may be decomposed into a first margin applied to the mean value of the contribution value in question plus a second margin applied to the variance value of the contribution value.

It can be understood from the foregoing that more samples of the at least one channel-related parameter Pc (therefore more acquiring time) is needed to determine the contribution of a first time-reference class with a longer timescale of impact on the channel response than to determine the contribution of a second time-reference class with a shorter timescale of impact on the channel response. It means that at some point in time, the contribution of one or more time-reference classes (shorter timescale) may have been determined, or updated, while the contribution of one or more time-reference classes (longer timescale) may not yet be determined. Channel inference may be used in that case for the one or more time-reference classes (longer timescale) that have not yet been determined, as detailed hereafter.

In a step S402, the equalization optimizer 300 obtains environmental conditions data Ed which represent the environmental conditions at which the one or more contribution values have been determined in the step S401.

In a step S403, the equalization optimizer 300 records, for example in the LUT 313 in the context of Fig. 3, the at least one contribution value for channel C, which has been obtained in the step S401, in association with the environmental data Ed obtained in the step S402.

**Fig. 5** schematically represents an algorithm for recording information with respect to other channels CH_Id than the channel C, which can be used for channel inference for configuring the equalization-related operations concerning the channel C.

In a step S501, the equalization optimizer 300 receives learnt data, which include at least one contribution value Cont [CH_Id] for at least one respective time-reference class with respect to at least one other channel CH_Id. The learnt data Ld further include environmental conditions data Ed [CH_Id] representing the environmental conditions in which the at least one contribution value Cont [CH_Id] in question has been obtained.

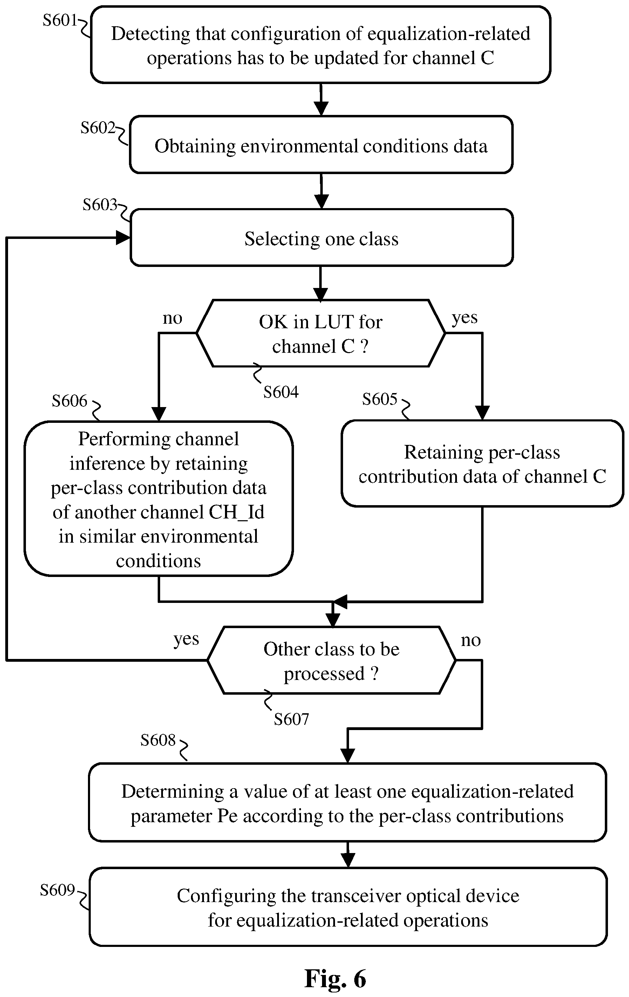

In a step S502, the equalization optimizer 300 records, for example in the LUT 313 in the context of Fig. 3, the at least one contribution value for the at least one other channel CH_Id, which has been obtained in the step S501, in association with the environmental data Ed [CH_Id] obtained at the same time. The learnt data Ld can then be used for channel inference in the case where at least one contribution value for the channel C is not yet available or outdated when comes the time to configure or refresh configuration of the equalization-related operations concerning the channel C, as detailed hereafter with respect to Fig. 6.

**Fig. 6** schematically represents an algorithm for configuring a transceiver optical device with respect to the equalization-related operations concerning the channel C.

In a step S601, the equalization optimizer 300 detects that the configuration of equalization-related operations has to be updated for the channel C. For example, the equalization optimizer 300 reviews the configuration of equalization-related operations on a cyclic basis. According to another example, the equalization optimizer 300 reviews the configuration of equalization-related operations when the environmental conditions, as expressed by the environmental conditions data Ed, are changing or are forecasted to change (for example, by relying on some weather forecast information).

In a step S602, the equalization optimizer 300 obtains environmental conditions data Ed which represent the environmental conditions at which the equalization-related operations have to be performed for the channel C.

In a step S603, the equalization optimizer 300 selects one time-reference class among the time-reference classes defined for the at least one channel-related parameter Pc considered to determine the at least one equalization-related parameter Pe used to determine the configuration of the equalization-related operations.

In a step S604, the equalization optimizer 300 determines whether or not the equalization optimizer 300 has recorded (typically, in LUT 313 in Fig. 3) a value of contribution of the selected time-reference class to the at least one channel-related parameter Pc for the channel C associated with the environmental conditions in question. If so, a step S605 is performed; otherwise, a step S606 is performed.

In a particular embodiment, the equalization optimizer 300 further checks whether or not the value of contribution of the selected time-reference class to the at least one channel-related parameter Pc for the channel C is too old, namely whether or not a predetermined time duration threshold has lapsed since the recording of said value has been made. If so, the equalization optimizer 300 may consider performing preferably channel inference (step S606) if a corresponding newer value has been recorded for a suitable other channel CH_Id. The equalization optimizer 300 may also consider activating analysis of the at least one channel-related parameter Pc so as to obtain an up-to-date value of contribution of the selected time-reference class to the at least one channel-related parameter Pc for the channel C.

In the step S605, the equalization optimizer 300 retains the value of contribution of the selected time-reference class to the at least one channel-related parameter Pc for the channel C as previously recorded. Then, a step S607 is performed.

In the step S606, the equalization optimizer 300 selects another channel CH_Id for which the equalization optimizer 300 has recorded a value of contribution of the selected time-reference class to the at least one channel-related parameter Pc with similar environmental conditions.

Similar environmental conditions means environmental conditions Ed[CH_Id] recorded for the channel CH_Id which are not different from the environmental conditions data obtained in the step S602 beyond a predetermined threshold (e.g., threshold of temperature, threshold of vibrations...), at least for the selected time-reference class. It means that a comparison between the environmental conditions Ed[CH_Id] recorded for the channel CH_Id with the environmental conditions data obtained in the step S602 only concerns a part thereof, wherein said part thereof depends on the selected time-reference class. For example, a comparison on vibration information of the environmental conditions can be specifically made when the selected time-reference class is related to impact on the channel response of vibrations in the vicinity of the optical line supporting the considered channel. In other words, the environmental conditions Ed[CH_Id] recorded for the channel CH_Id with the environmental conditions data obtained in the step S602 can be filtered out according to the selected time-reference class. More complex filtering may be defined than the example provided above with vibrations. The equalization optimizer 300 thus selects at least one type of environmental conditions data among candidate types of environmental conditions data, according to the selected time-reference class and identifies, among the learnt data Ld, candidate channels that are usable for performing the channel inference according to similarity of environmental conditions for the selected at least one type of environmental conditions data. Then, the step S607 is performed.

Said another channel CH_Id may be selected by relying on a predetermined channel association input at set-up or deployment of the optical communications system 100. The predetermined channel association represents channels that have commonalities. For example, channels may be identified as being supported by optical lines deployed in the same neighborhood, which means that impact on the channel response should be roughly identical, at least for one or several time-reference classes, on both channels. The predetermined channel association may be aided using geolocation information of elements (splitters, termination points...) of the optical communications system 100 via which the optical lines in question run. The predetermined channel association may be aided using simulations.

Said another channel CH_Id may also be selected as having similar per-class contribution values in other environmental conditions. Thus, the equalization optimizer 300 identifies candidate channels that have similar per-class contribution values (*i.e.,* the difference between the per-class contribution values is less than a predetermined threshold) in other environmental conditions.

When plural channels are candidates to be used for channel inference with respect to the channel C, the equalization optimizer 300 selects the channel CH_Id that has the most up-to-date (newest) value of contribution of the selected time-reference class to the at least one channel-related parameter Pc.

If no candidate emerges to perform channel inference with respect to the channel C, the equalization optimizer 300 applies worst case parameters for the selected time-reference class. The worst-case parameters correspond to a full estimation equalization process with respect to the worst case of channel impairment(s) corresponding to the selected time-reference class in question that the optical communications system 100 is subject to face without service interruption according to system specifications.

In the step S607, the equalization optimizer 300 determines whether or not at least one time-reference class remains to be processed among the time-reference classes defined for the at least one channel-related parameter Pc. If so, the step S603 is repeated and the equalization optimizer 300 selects another one time-reference class among the time-reference classes defined for the at least one channel-related parameter Pc considered to determine the at least one equalization-related parameter Pe used to determine the configuration of the equalization-related operations; otherwise, a step S608 is performed.

Thus, it can be understood from the foregoing that it is proposed herein a solution wherein, for one or more time-reference classes, the equalization optimizer 300 analyzes the successive samples of at least one channel-related parameter Pc related to said channel so as to determine the contribution value(s) of said one or more time-reference classes to the at least one channel-related parameter Pc, and for one or more time-reference classes, the equalization optimizer 300 uses channel inference so as to determine the contribution value(s) for one or more remaining time-reference classes by relying on information learnt from another channel in similar environmental conditions.

In the step S608, the equalization optimizer 300 determines a value of the at least one equalization-related parameter Pe according to the per-class contributions. The whole set of contributions is considered.

In a step S609, the equalization optimizer 300 configures (may be done remotely) the transceiver optical device for equalization-related operations according to the value of the at least one equalization-related parameter Pe.

Once the transceiver optical device is configured according to the whole set of contributions, only updates by parts can be done. Reviews of the contribution value for each time-reference class among said predetermined time-reference classes can be done at a rate of the timescale corresponding to the time-reference class in question. Thus, the contribution value for a time-reference class having a corresponding timescale of ten microseconds is reviewed every ten microseconds, the contribution value for a time-reference class having a corresponding timescale of one millisecond can be reviewed every millisecond, the contribution value for a time-reference class having a corresponding timescale of one second can be reviewed every second, etc. Then, when the contribution value for one time-reference class has been reviewed, the equalization optimizer 300 updates accordingly the at least one equalization-related parameter Pe so that a part thereof which depends on the time-reference class in question is only updated, which leads to a per-class update. The equalization optimizer 300 can then reconfigure the transceiver optical device for the equalization-related operations with respect to the optical signals transmitted via the channel, using the value of the at least one equalization-related parameter Pe after the per-class update. Operating by parts thus enables preserving computing resources, especially when considering iterative process such as CMA (Constant Modulus algorithm) for determining the equalization coefficients (taps).

In a particular embodiment, when the contribution value for one time-reference class to the at least one channel-related parameter Pc is below a predetermined threshold THc, the equalization optimizer 300 does not take into account said time-reference class when configuring or reconfiguring the transceiver optical device for the equalization-related operations.

In a particular embodiment, when the difference in contribution value for one class between two successive reviews of the contribution of said time-reference class to the at least one channel-related parameter Pc is below a predetermined threshold THd, the equalization optimizer 300 does not update the part of the at least one equalization-related parameter Pe which depends on the time-reference class in question. It has to be noted that the equalizer 360 however takes into account the at least one equalization-related parameter Pe as a whole in order to perform the equalization-related operations.

It can be understood from the foregoing disclosure that the contributions values are not expressed as percentage of the value of the at least one channel-related parameter Pc.

It can be understood from the foregoing disclosure that the contents of the look-up tables 313 may be shared with another transceiver optical device in order to speed up acquisition of knowledge about per-class contribution values in the optical communications system 100.

**Fig. 7** schematically represents an algorithm for selectively activating analysis of successive samples of the at least one channel-related parameter Pc so as to determine the contribution value for at least one time-reference class with respect to the channel C. Once this value is obtained, the equalization optimizer 300 can use it instead of performing channel inference for determining the at least one equalization-related parameter Pe and thus for configuring the equalization-related operations with respect to the channel C.

In a step S701, the equalization optimizer 300 obtains environmental conditions data Ed which represent the current environmental conditions.

In a step S702, the equalization optimizer 300 checks whether or not the equalization optimizer 300 has recorded (typically, in LUT 313 in Fig. 3) a value of contribution of one or more (typically, any and all) time-reference classes to the at least one channel-related parameter Pc for the channel C associated with the environmental conditions in question. If so, a step S703 is performed; otherwise, a step S704 is performed.

In the step S703, the equalization optimizer 300 activates analysis of successive samples of the at least one channel-related parameter Pc so as to determine the contribution value for said one or more time-reference classes with respect to the channel C. The equalization optimizer 300 is thus able to obtain and record the contribution value for said one or more time-reference classes with respect to the channel C in the environmental conditions described by the environmental conditions data Ed. In the context of Fig. 3, the LUT 313 can thus be filled for said one or more time-reference classes with respect to the channel C in the environmental conditions described by the environmental conditions data Ed. Activating the analysis in question can also performed when the value of contribution of said one or more time-reference classes to the at least one channel-related parameter Pc for the channel C is too old (with the same meaning as above).

In the step S704, the equalization optimizer 300 inactivates the analysis of successive samples of the at least one channel-related parameter Pc so as to determine the contribution value for said one or more time-reference classes with respect to the channel C. Indeed, the equalization optimizer 300 already recorded the necessary information and thus computing resources and energy can be preserved.

Hence, in a particular embodiment, the equalization optimizer 300 selectively activates (step S703) / inactivates (step S704) the analysis of the samples of the at least one channel-related parameter Pc for one or more time-reference classes, according to presence or aging of respective contribution values in records for the environmental conditions data Ed in question.

**Fig. 8** schematically represents an illustrative hardware platform for implementing the equalization optimizer 300.

According to the illustrative hardware architecture, the equalization optimizer 300 comprises at least the following components interconnected by a communication bus 810: a processor, microprocessor, microcontroller or CPU (Central Processing Unit) 1001; a RAM (Random-Access Memory) 802; a ROM (Read-Only Memory) or Flash memory 803; an HDD (Hard-Disk Drive) or an SD (Secure Digital) card reader 804, or any other device adapted to read information stored on non-transitory information storage medium; and at least one communication interface COM 805 so as to enable optical communications as used herein.

CPU 801 is capable of executing instructions loaded into RAM 802 from ROM 803 or from an external memory, such as an SD card via the SD card reader 804. After the equalization optimizer 300 has been powered on, CPU 801 is capable of reading instructions from RAM 802 and executing these instructions. The instructions form one computer program that causes CPU 801 to perform some or all of the steps of the algorithms described herein.

Consequently, it is understood that any and all steps of the algorithm described herein may be implemented in software form by execution of a set of instructions or program by a programmable computing machine, such as a DSP (Digital Signal Processor) or a microcontroller; or else implemented in hardware form by a machine or a dedicated chip or chipset, such as an FPGA (Field-Programmable Gate Array) or an ASIC (Application-Specific Integrated Circuit). In general, the equalization optimizer 300 comprises processing electronics circuitry adapted and configured for implementing the relevant steps, operations and algorithms as described herein.

As already mentioned, the equalization optimizer 300 is not mandatorily located at the receive end of the optical line carrying the channel considered. The equalization optimizer 300 may indeed be located at the transmit end of said optical line.

Thus, in a particular embodiment, the equalization optimizer 300 is located at a central point, namely 111 at the first transceiver optical device T1 in the optical communications system 100 depicted in Fig. 1, since this is a point of convergence of many channels (*e.g.*, OLT) and since channels over a same optical line (e.g., both directions) are reciprocal. The central point can in that case have access (comprise or be connected to) to high computing capabilities, which reduces deployment costs, since there is no need to have high computing capabilities at the other ends (*e.g.*, ONUs) while still benefiting from equalization optimization.

Contributions values, or look-up table contents, may then be distributed from the first transceiver optical device T1 (*e.g.,* OLT) to the other transceiver optical devices (*e.g.,* ONUs). And, in a variant, in order to avoid transmissions of look-up table contents, it could be beneficial to compute and use the aforementioned contributions values to perform pre-equalization at the central point end in downstream direction (typically from the OLT toward the ONUs) and post-equalization at the central point in upstream direction (typically from the ONUs to the OLT).

**Claims**

1. A method for configuring a transceiver optical device (111, 112) in terms of equalization-related operations with respect to optical signals transmitted via a channel of an optical line (121), the optical signals being subject during transmission over the channel to channel impairments having timescales of impact on channel response of the channel which can be categorized into corresponding time-reference classes, the method being performed by an equalization optimizer (300), wherein the method comprises:

   - performing (S401) an analysis for analyzing successive samples of at least one channel-related parameter Pc related to said channel so as to determine a contribution value for one or more time-reference classes among said time-reference classes, wherein the contribution value represents to what extent the channel impairments corresponding to the time-reference class in question contribute to said at least one channel-related parameter Pc;

   - obtaining (S602) environmental conditions data (Ed) representing environmental conditions at which the equalization-related operations have to be performed;

   - performing channel inference (S606) so as to determine a contribution value for one or more remaining time-reference classes among said time-reference classes by relying on information (Ld) learnt from another channel in similar environmental conditions as those represented by the obtained environmental conditions data (Ed);

   - determining (S608) a value of at least one equalization-related parameter Pe according to the contribution values of the predetermined time-reference classes; and

- configuring (S609) the transceiver optical device (111, 112) for equalization-related operations with respect to the optical signals transmitted via the channel, using the determined value of the at least one equalization-related parameter.

2. The method according to claim 1, wherein the contribution value for each class is determined using wavelet transforms, and wherein, for each time-reference class, the equalization optimizer (300) uses at least one wavelet with a timescale matching the timescale of impact on the channel of the channel impairments corresponding to the time-reference class in question.

3. The method according to claim 2, wherein the time-reference classes are dynamically predetermined during a period of time in which equalization is performed at receiver side at full resources capacity, wherein a whole set of wavelet transform candidates are used to detect which timescales are revealed to be above a predetermined contribution threshold with respect to the at least one channel-related parameter or to at least one other channel-related parameter and shall be retained to define the time-reference classes to be used afterwards.

4. The method according to any one of claims 1 to 3, wherein the equalization-related operations are among:

   - dynamically determining a quantity of hardware blocks of the transceiver optical device usable to perform equalization of the optical signals;
   - dynamically determining a set of equalization coefficients;
   - dynamically determining a set of pre-equalization coefficients;
   - dynamically determining preamble size; and
   - dynamically determining margin on the at least one equalization-related parameter Pe.

5. The method according to any one of claims 1 to 4, wherein the equalization optimizer (300) adds a predetermined margin to each determined contribution value, wherein the margin depends on the contribution value to which the margin applies.

6. The method according to any one of claims 1 to 5, wherein when a predetermined time duration threshold has lapsed since recording of the value of contribution of one or more time-reference classes to the at least one channel-related parameter Pc for the channel, the equalization optimizer (300) performs the channel inference.

7. The method according to claim 6, wherein the equalization optimizer (300) selectively activates (S703) / inactivates (S704) the analysis of the samples of the at least one channel-related parameter Pc for one or more time-reference classes, according to whether or not the analysis of the samples of the at least one channel-related parameter Pc for one or more time-reference classes has previously been performed for said environmental conditions data (Ed).

8. The method according to any one of claims 1 to 7, wherein performing the channel inference includes:

   - identifying, among the learnt data (Ld), candidate channels that have similar contribution values in other environmental conditions.

9. The method according to any one of claims 1 to 8, wherein performing the channel inference includes:

   - selecting at least one type of environmental conditions data among candidate types of environmental conditions data, according to the one or more remaining time-reference classes;
   - identifying, among the learnt data (Ld), candidate channels that are usable for performing the channel inference according to similarity of environmental conditions for the selected at least one type of environmental conditions data.

10. The method according to any one of claims 1 to 9, wherein when the contribution value for one time-reference class to the at least one channel-related parameter Pc is below a predetermined threshold THc, the equalization optimizer (300) does not take into account said time-reference class when configuring or reconfiguring the transceiver optical device (111, 112) for the equalization-related operations.

11. The method according to any one of claims 1 to 10, wherein when the difference in contribution value for one class between two successive reviews of the contribution of said time-reference class to the at least one channel-related parameter Pc is below a predetermined threshold THd, the equalization optimizer (300) does not update the part of the at least one equalization-related parameter Pe which depends on the time-reference class in question.

12. The method according to any one of claims 1 to 11, wherein the equalization optimizer is located at a central point in an optical communications system (100), and wherein the aforementioned contributions values are used to perform pre-equalization at the central point end in downstream direction and post-equalization at the central point in upstream direction.

**13.** A computer program product comprising instructions causing implementation of the method according to any one of claims 1 to 12, when the instructions are executed by a processor.

**14.** An information storage medium storing instructions causing implementation of the method according to any one of claims 1 to 12, when the instructions are read from the information storage medium and executed by a processor.

**15.** An equalization optimizer (300) intended for configuring a transceiver optical device (111, 112) in terms of equalization-related operations with respect to optical signals transmitted via a channel of an optical line (121), the optical signals being subject during transmission over the channel to channel impairments having timescales of impact of said channel impairments on channel response of the channel which can be categorized into corresponding time-reference classes, the equalization optimizer (300) comprising electronic circuitry configured for:

- performing (S401) an analysis for analyzing successive samples of at least one channel-related parameter Pc related to said channel so as to determine a contribution value for one or more time-reference classes among said time-reference classes, wherein the contribution value represents to what extent the channel impairments corresponding to the time-reference class in question contribute to said at least one channel-related parameter Pc;
- obtaining (S602) environmental conditions data (Ed) representing environmental conditions at which the equalization-related operations have to be performed;
- performing channel inference (S606) so as to determine a contribution value for one or more remaining time-reference classes among said time-reference classes by relying on information (Ld) learnt from another channel in similar environmental conditions as those represented by the obtained environmental conditions data (Ed);
- determining (S608) a value of at least one equalization-related parameter Pe according to the contribution values of the predetermined time-reference classes; and
- configuring (S609) the transceiver optical device (111, 112) for equalization-related operations with respect to the optical signals transmitted via the channel, using the determined value of the at least one equalization-related parameter.

**Fig. 1**

**Fig. 2**

**Fig. 3**

S401 — Analyzing successive samples of at least one channel-related parameter Pc and determining per-class contributions for channel C

S402 — Obtaining environmental data Ed

S403 — Recording in LUT the per-class contributions data for channel C in association with the environmental data Ed

## Fig. 4

S501 — Receving learnt data Ld including per-class contributions Cont[CH_Id] for at least one channel CH_Id with environmental data Ed[CH_Id]

S502 — Recording in LUT the per-class contributions data Cont[CH_Id] for the at least one channel CH_Id in association with the environmental data Ed[CH_Id]

## Fig. 5

S601 — Detecting that configuration of equalization-related operations has to be updated for channel C

S602 — Obtaining environmental conditions data

S603 — Selecting one class

OK in LUT for channel C ?    S604

no →    S606 Performing channel inference by retaining per-class contribution data of another channel CH_Id in similar environmental conditions

yes →    S605 Retaining per-class contribution data of channel C

Other class to be processed ?    S607

yes ↑    no ↓

S608 — Determining a value of at least one equalization-related parameter Pe according to the per-class contributions

S609 — Configuring the transceiver optical device for equalization-related operations

**Fig. 6**

S701 — Obtaining environmental data

OK in LUT?

no → yes

S702

S703 — Activating analysis for obtaining contributions data for channel C

S704 — Inactivating analysis and using recorded contributions data for channel C

**Fig. 7**

CPU 801   RAM 802   ROM 803   ⟋300

SD 804   COM 805   810

**Fig. 8**

**EP 4 730 675 A1**

## EUROPEAN SEARCH REPORT

Application Number

EP 24 30 6729

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 938 483 B1 (BABAEE RAMIN [CA] ET AL) 2 March 2021 (2021-03-02) * figure 7 * ----- | 1-15 | INV. H04B10/2569 H04B10/2507 H04B10/69 |
| A | US 6 909 742 B1 (LEONOSKY THOMAS J [US]) 21 June 2005 (2005-06-21) * column 5, line 15 - line 29 * ----- | 1-15 | |
| A | US 2016/248501 A1 (FROC GWILLERM [FR] ET AL) 25 August 2016 (2016-08-25) * figure 7 * ----- | 1-15 | |

TECHNICAL FIELDS SEARCHED (IPC)

H04B

The present search report has been drawn up for all claims

| Place of search | Date of completion of the search | Examiner |
|---|---|---|
| Munich | 26 March 2025 | Borsier, Celine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 730 675 A1**

## ANNEX TO THE EUROPEAN SEARCH REPORT
## ON EUROPEAN PATENT APPLICATION NO.

EP 24 30 6729

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2025

| Patent document cited in search report | | Publication date | Patent family member(s) | | Publication date |
|---|---|---|---|---|---|
| US 10938483 | B1 | 02-03-2021 | EP | 3926860 A1 | 22-12-2021 |
| | | | US | 10938483 B1 | 02-03-2021 |
| US 6909742 | B1 | 21-06-2005 | US | 6909742 B1 | 21-06-2005 |
| | | | US | 2004208266 A1 | 21-10-2004 |
| | | | WO | 2004095082 A2 | 04-11-2004 |
| US 2016248501 | A1 | 25-08-2016 | CN | 105765883 A | 13-07-2016 |
| | | | EP | 2879315 A1 | 03-06-2015 |
| | | | JP | 6121048 B2 | 26-04-2017 |
| | | | JP | 2016531452 A | 06-10-2016 |
| | | | US | 2016248501 A1 | 25-08-2016 |
| | | | WO | 2015079815 A1 | 04-06-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- IMT Vision: Framework and overall objectives of the future development of IMT for 2020 and beyond. *ITU-R M.2083*, September 2015

- Study on new radio access technology: Radio access architecture and interfaces. *3GPP TR 38.801 V 14.0.0*, March 2017